# EUROPEAN PATENT APPLICATION

(11) **EP 4 513 255 A1**
(43) Date of publication of application: **26.02.2025**
(21) Application number: 23859119.2
(22) Date of filing: 10.08.2023
(51) Int. Cl.: G02C 5/14, G02C 5/16, G02B 27/01, G02C 11/00

(54) **SMART GLASSES AND ELECTRONIC DEVICE**

(30) Priority: 01.09.2022 CN 202211061743
(71) Applicant: Huawei Technologies Co., Ltd., Shenzhen, Guangdong 518129 (CN)
(72) Inventor: LI, Kuokuo, Shenzhen, Guangdong 518129 (CN); LU, Qingchun, Shenzhen, Guangdong 518129 (CN); CHEN, Qi, Shenzhen, Guangdong 518129 (CN); WANG, Jiabao, Shenzhen, Guangdong 518129 (CN)
(74) Representative: Goddar, Heinz J.
(86) International application number: PCT/CN2023/112342
(87) International publication number: WO 2024/046085

(57) **Abstract**

Smart glasses (10) and an electronic device are provided. The smart glasses (10) include a glasses frame (11), a glasses temple (12), and an electronic component. The glasses frame (11) is connected to the glasses temple (12), and the electronic component is disposed in the glasses temple (12). The glasses temple (12) may specifically include a bending adjustment portion (121), and the bending adjustment portion (121) includes a flexible housing (122) and a flexible metal member (123). The flexible housing (122) is of a low-pressure integrated structure and is provided with a hollow accommodation cavity (124). The flexible metal member (123) is embedded in the accommodation cavity (124). The bending adjustment portion (121) in the smart glasses (10) is bendable. A user may bend the bending adjustment portion (121) to make the glasses temple (12) match a head shape of the user, so that a degree of fitting between the smart glasses and the head of the user is improved, and the smart glasses can be worn more stably and aesthetically.

## Description

### CROSS-REFERENCE TO RELATED APPLICATIONS

This application claims priority to Chinese Patent Application No. 202211061743.0, filed with the China National Intellectual Property Administration on September 1, 2022 and entitled "SMART GLASSES AND ELECTRONIC DEVICE", which is incorporated herein by reference in its entirety.

### TECHNICAL FIELD

This application relates to the field of electronic device technologies, and in particular, to smart glasses and an electronic device.

### BACKGROUND

As a new smart wearable device, smart glasses have independent operating systems, and can achieve functions such as schedule reminding, navigation, calling, and image shooting by receiving operation instructions of a user. With continuous development of technologies such as augmented reality (Augmented Reality, AR), virtual reality (Virtual Reality, VR), and mixed reality, the smart glasses may be further used to implement near-eye display scenarios, and can display images of virtual objects and real environments in a real-time superimposing manner.

In a conventional technology, to implement various functions of the smart glasses, a glasses temple of the smart glasses is usually a hollow hard housing, and electronic components such as a circuit board, a battery, a speaker, and a microphone are disposed in the glasses temple. However, due to overall rigidity of the glasses temple of the smart glasses, a bending degree cannot be adjusted. As a result, a degree of fitting between the glasses temple and the head of the user is poor, and the glasses temple is incapable of fitting head shapes of different users.

### SUMMARY

This application provides smart glasses and an electronic device, to improve a degree of fitting between the smart glasses and a head of a user, so that the smart glasses can be worn more stably and aesthetically, and universality of the smart glasses is improved.

According to a first aspect, this application provides smart glasses. The smart glasses may include a glasses frame, a glasses temple, and an electronic component. The glasses frame is connected to the glasses temple, and the electronic component is disposed in the glasses temple. The glasses temple includes a bending adjustment portion. The bending adjustment portion specifically includes a flexible housing and a flexible metal member. The flexible housing is of a low-pressure integrated structure, and the flexible housing is provided with a hollow accommodation cavity. The flexible metal member is embedded in the accommodation cavity.

In the foregoing smart glasses, the bending adjustment portion is bendable, and may be bent into a bent ear-fitting shape, so as to be placed on a human ear. When wearing the smart glasses, a user may bend the flexible housing and the flexible metal member to a specified position and keep them at the specified position, so that the glasses temple matches a head shape of the user, thereby improving a degree of fitting between the smart glasses and the head of the user. In this way, the smart glasses can be worn more stably and aesthetically, and further, the user can bend the bending adjustment portion based on the head shape of the user, thereby improving universality of the smart glasses.

During arrangement of the foregoing smart glasses, the glasses temple may further include a support portion. The support portion includes a housing. The housing is connected to the flexible housing, the housing is provided with a hollow accommodation portion, and the electronic component is disposed in the accommodation portion. In this technical solution, a portion of the glasses temple is the bending adjustment portion. The support portion may be configured to support the bending adjustment portion and accommodate the electronic component. When wearing the smart glasses, the user may adjust only a bending degree of the bending adjustment portion, which is easy to operate.

A specific position of the support portion is not limited. For example, in a technical solution, the support portion may be disposed between the glasses frame and the bending adjustment portion, and the glasses frame and the flexible housing each are connected to the housing. In another technical solution, the bending adjustment portion may be disposed between the glasses frame and the support portion, and the glasses frame and the housing each are connected to the flexible housing.

In a specific technical solution, the support portion includes a first support portion and a second support portion. The first support portion is connected between the glasses frame and the bending adjustment portion, and the second support portion is connected to an end that is of the bending adjustment portion and that is away from the first support portion. The first support portion and the second support portion are respectively disposed at two ends of the bending adjustment portion, and may support the bending adjustment portion. When wearing the smart glasses, the user may adjust only the bending degree of the bending adjustment portion, which is easy to operate.

Specifically, the first support portion includes a first housing, and the first housing is provided with a first accommodation portion that is hollow. The second support portion includes a second housing, and the second housing is provided with a second accommodation portion that is hollow. The first accommodation portion and the second accommodation portion each communicate with the accommodation cavity. The electronic component includes a first electronic component and a second electronic component. The first electronic component is disposed in the first accommodation portion, the second electronic component is disposed in the second accommodation portion, and the first electronic component is connected to the second electronic component through the flexible metal member. In this technical solution, the first support portion and the second support portion not only play a support function, but also may accommodate the electronic component. In this way, a layout of the electronic component in the glasses temple is relatively appropriate, and space in the glasses temple can be fully used.

Certainly, in addition to the foregoing solutions, the bending adjustment portion may alternatively extend to the entire glasses temple. Specifically, the flexible housing is connected to the glasses frame, and the electronic component is disposed in the accommodation cavity and connected to the flexible metal member. In this technical solution, the entire glasses temple may be bent, and the user may bend any portion of the glasses temple according to a specific requirement, to form the ear-bending shape, so that universality of the smart glasses can be further improved.

A specific material of the flexible housing is not limited in this application, for example, may be any one or more of polyamide, polyolefin, or polyurethane hotmelt.

In addition, a type of the flexible metal member is not specifically limited, for example, may be a titanium sheet, a copper sheet, a stainless steel sheet, or an aluminum product.

According to a second aspect, this application provides an electronic device. The electronic device includes a body and the smart glasses in the first aspect, and the body is connected to the smart glasses. When wearing the smart glasses, a user may change a bending adjustment portion of a glasses temple to adjust a bent ear-fitting shape and an angle of the glasses temple 12, so that a degree of fitting between the smart glasses and the head of the user can be improved, the smart glasses can be worn more stably and aesthetically. This improves universality of the smart glasses, and further improves user experience in using the electronic device.

### BRIEF DESCRIPTION OF DRAWINGS

FIG. 1 is a diagram of a structure of smart glasses according to an embodiment of this application;
FIG. 2 is a partial diagram of a glasses temple in FIG. 1;
FIG. 3 is a diagram of a structure of a glasses temple according to an embodiment of this application;
FIG. 4 is a simulated diagram of wearing smart glasses according to an embodiment of this application;
FIG. 5 is a diagram of another structure of a glasses temple according to an embodiment of this application;
FIG. 6 is a diagram of still another structure of a glasses temple according to an embodiment of this application; and
FIG. 7 is a diagram of a structure of smart glasses according to an embodiment of this application.

Reference numerals:
10: Smart glasses;
11: Glasses frame;
12: Glasses temple;
13: Electronic component;
13a: First electronic component;
13b: Second electronic component;
111: Lens;
121: Bending adjustment portion;
122: Flexible housing;
123: Flexible metal member;
124: Accommodation cavity;
125: Support portion;
125a: First support portion;
125b: Second support portion;
126: Housing;
126a: First housing;
126b: Second housing;
127: Accommodation portion;
127a: First accommodation portion;
127b: Second accommodation portion.

### DESCRIPTION OF EMBODIMENTS

To make the objectives, technical solutions, and advantages of this application clearer, the following further describes this application in detail with reference to the accompanying drawings.

Usually, glasses temples need to be placed on human ears when smart glasses are worn. The glasses temple is usually provided with a bending portion to make the glasses temple better fit the ear. However, because people have different head shapes and ear positions, a fixed bending portion cannot fit all persons. In addition, a housing of the glasses temple is relatively hard, and a user cannot adjust a bending degree of the bending portion. Therefore, most of vertical distances are greater than 4 mm, so that a degree of fitting between the glasses temple and the head of the user is poor, resulting in unstable wearing and poor universality of the smart glasses. It should be noted that the vertical distance is a horizontal distance from one end that is of the glasses temple and that is away from a glasses frame to the back of the head.

Based on the foregoing reasons, this application provides smart glasses and an electronic device, to improve a degree of fitting between the smart glasses and a head of a user, so that the smart glasses can be worn more stably and aesthetically, and universality of the smart glasses is improved.

Reference to "an embodiment", "some embodiments", or the like described in this specification indicates that one or more embodiments of this application include a specific feature, structure, or characteristic described with reference to the embodiments. Therefore, statements such as "in an embodiment", "in another embodiment", "in some embodiments", "in some other embodiments", or "in other embodiments" that appear at different places in this specification do not necessarily mean reference to a same embodiment. Instead, the statements mean "one or more but not all of embodiments", unless otherwise specifically emphasized in another manner. Terms "include", "comprise", "have", and their variants all mean "include but are not limited to", unless otherwise specifically emphasized in another manner.

The terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly.

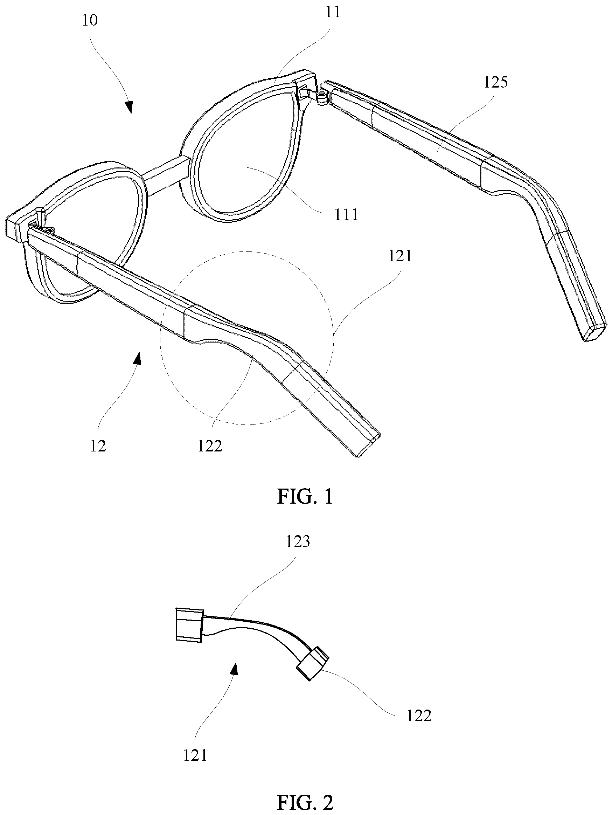

FIG. 1 is a diagram of a structure of smart glasses according to an embodiment of this application. FIG. 2 is a partial diagram of a glasses temple in FIG. 1. As shown in FIG. 1 and FIG. 2, smart glasses 10 include a glasses frame 11, a glasses temple 12, and an electronic component (not shown in the figure). In this application, the smart glasses 10 may be used as an independent wearable device, have an independent operating system, and can implement various functions by installing software. Certainly, the smart glasses 10 may be further used as an interaction apparatus of the electronic device, and are configured to interact with a user, and send interaction information to a host of the electronic device. The glasses frame 11 is configured to provide mounting space for a lens 111. The lens 111 may be a corrective lens, or may be a sun lens or a protective lens, or may be a lens for the user to view a 3D image or a virtual image. Therefore, the lens 111 may be a flat lens, a concave lens, a convex lens, a display, or the like. This is not specifically limited in this application. One end of the glasses temple 12 is connected to the glasses frame 11, to form a mechanical body structure of the smart glasses 10. When the smart glasses 10 are worn, the glasses temple 12 is placed on a human ear, so that the glasses frame 11 is located in front of a human eye. In addition, the electronic component is disposed in the glasses temple 12. Specifically, the electronic component may include a circuit board, a battery, a speaker, a microphone, a camera, and the like. This is not specifically limited herein.

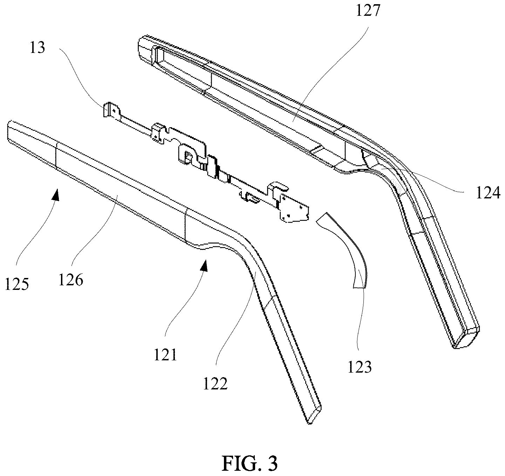

FIG. 3 is a diagram of a structure of a glasses temple according to an embodiment of this application. As shown in FIG. 3, the glasses temple 12 includes a bending adjustment portion 121. The bending adjustment portion 121 specifically includes a flexible housing 122 and a flexible metal member 123. The flexible housing 122 is of a low-pressure integrated structure, and is provided with a hollow accommodation cavity 124. The flexible metal member 123 may be embedded in the accommodation cavity 124. In this embodiment of this application, the low-pressure integrated structure of the flexible housing 122 is made by using a low-pressure integrated molding process. It should be noted that the low-pressure integrated molding process in this application may be an integrated molding process implemented at a temperature less than 190 degrees Celsius and a pressure less than 10 megapascals. For example, in some embodiments, the low-pressure integrated molding process may be low-pressure injection molding. During specific manufacturing, the flexible metal member 123 may be positioned in an injection mold. Then, an injection material is injected into the mold, so that the injection material can wrap an outer surface of the flexible metal member 123. After the injection material is cured and molded into the flexible housing 122, a molding process of the bending adjustment portion 121 is completed, and the flexible metal member 123 is embedded in the flexible housing 122. In the foregoing embodiment, the flexible housing 122 may be made of any one or more materials such as polyamide (Polyamide, PA), polyolefin (Polyolefin, PO), or polyurethane hotmelt (PUR-Hotmelt). This is not specifically limited herein. In addition, the flexible metal member 123 may be in a rod shape, a sheet shape, or another irregular shape, and a material of the flexible metal member 123 may be any one or more metals such as titanium, copper, stainless steel, or aluminum.

In the foregoing smart glasses 10, the bending adjustment portion 121 is bendable, and may be configured to be bent into a bent ear-fitting shape, so as to be placed on the human ear. When wearing the smart glasses 10, the user may adjust a bending degree by bending the bending adjustment portion 121, which is easy to operate. Specifically, the user may bend the flexible housing 122 and the flexible metal member 123 to a specified position and keep them at the specified position, so that the glasses temple 12 matches a head shape of the user, thereby improving a degree of fitting between the smart glasses 10 and the head of the user. In this way, the smart glasses 10 can be worn more stably and aesthetically, and further, the user can bend the bending adjustment portion 121 based on the head shape of the user, thereby improving universality of the smart glasses 10.

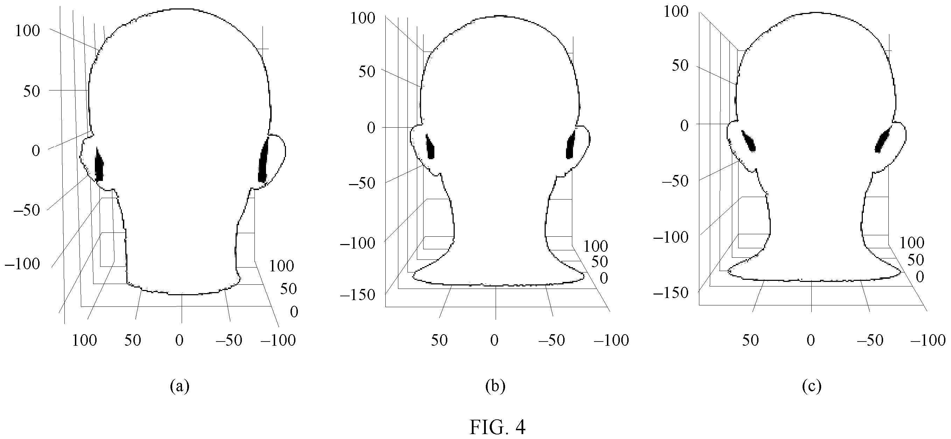

When conventional smart glasses are worn, a vertical distance is usually greater than 4 mm, and the vertical distance can even be greater than 10 mm after some users wear smart glasses. Consequently, the smart glasses are worn unstably and unaesthetically. FIG. 4 is a simulated diagram of wearing smart glasses according to an embodiment of this application. As shown in FIG. 4, in the smart glasses 10 in this application, the bending adjustment portion 121 may be bent toward the head, that is, the vertical distance may be adjusted. Based on different head shapes, the vertical distance of wearing the smart glasses 10 in this application may be adjusted as required. For example, the vertical distance may be 0 mm, 1 mm, 3 mm, 3.6 mm, 5 mm, 5.2 mm, 6.5 mm, 7 mm, 12 mm, or the like. Refer to the simulated wearing diagram in FIG. 4. (a) shows wearing effect with a vertical distance of 12 mm, (b) shows wearing effect with a vertical distance of 7 mm, and (c) shows wearing effect with a vertical distance less than 4 mm.

Still refer to FIG. 1 and FIG. 3. At least a part of the glasses temple 12 may be the bending adjustment portion 121 in this application. For example, in some embodiments, the bending adjustment portion 121 may extend to the entire glasses temple 12. In other words, the entire glasses temple 12 may be bendable. In this case, the user may determine a bending position based on the head shape and an ear position of the user, thereby adjusting the bending position of the glasses temple 12, and further ensuring the glasses temple 12 better fitting the head. The flexible housing 122 is connected to the glasses frame 11. The electronic component 13 may be disposed in the accommodation cavity 124 of the flexible housing 122, and is connected to the flexible metal member 123. The flexible housing 122 may form an isolation layer between the electronic component 13 and an external environment, to ensure that the electronic component 13 is free from dust, water vapor, and the like.

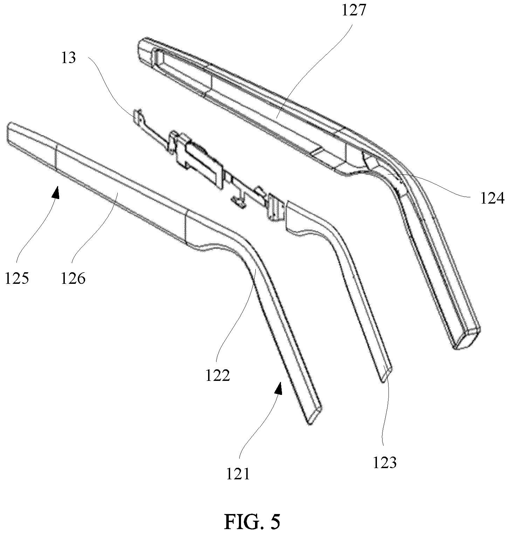

In some other embodiments, a portion of the glasses temple 12 may be the bending adjustment portion 121. For example, the glasses temple 12 may further include a support portion 125. The support portion 125 may include a housing 126 that is connected to the flexible housing 122. The housing 126 is provided with a hollow accommodation portion 127, and the electronic component 13 may be disposed in the accommodation portion 127. A specific position of the support portion 125 is not limited. FIG. 5 is a diagram of another structure of a glasses temple according to an embodiment of this application. As shown in FIG. 5, in an embodiment, the support portion 125 may be disposed between the glasses frame 11 and the bending adjustment portion 121. In other words, the bending adjustment portion 121 may extend to a tail of the glasses temple 12. Specifically, one end of the housing 126 is connected to the glasses frame 11, and the other end is connected to the flexible housing 122. In another embodiment, the support portion 125 may alternatively be disposed at an end that is of the bending adjustment portion 121 and that is away from the glasses frame 11. In other words, the support portion 125 may extend to a tail of the glasses temple 12. Specifically, one end of the flexible housing 122 is connected to the glasses frame 11, and the other end is connected to the housing 126.

In the foregoing embodiments, the housing 126 of the support portion 125 may form an isolation layer between the electronic component 13 and the external environment, to ensure that the electronic component 13 is free from dust, water vapor, and the like. Specifically, a material of the housing 126 may be a metal material, for example, any one or more of stainless steel, titanium, titanium alloy, copper-zinc alloy, nickel-copper alloy, or high-nickel alloy. Alternatively, a material of the housing 126 may be a non-metal material, for example, any one or more of carbon fiber, plastic, or epoxy resin.

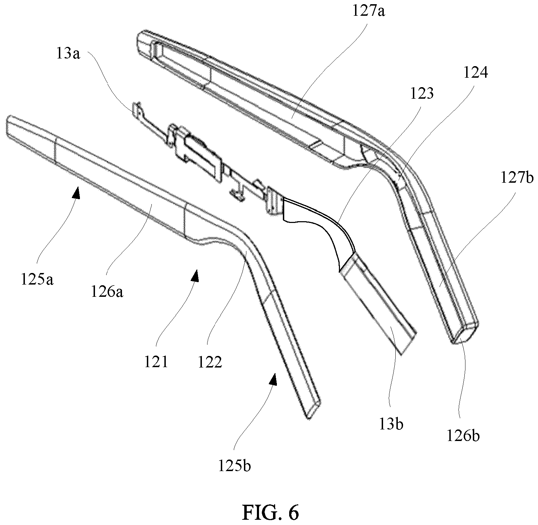

FIG. 6 is a diagram of still another structure of a glasses temple according to an embodiment of this application. As shown in FIG. 6, in a specific embodiment, the support portion 125 may include a first support portion 125a and a second support portion 125b. Specifically, the first support portion 125a may be disposed between the glasses frame 11 and the bending adjustment portion 121, and the second support portion 125b may be connected to an end that is of the bending adjustment portion 121 and that is away from the first support portion 125a. In this embodiment, the bending adjustment portion 121 may serve as a bent ear-fitting portion of the glasses temple 12, that is, a portion that is in contact with a human ear. The first support portion 125a and the second support portion 125b are respectively disposed at two ends of the bending adjustment portion 121, and may support the bending adjustment portion 121. When wearing the smart glasses 10, the user may adjust only the bending degree of the bending adjustment portion 121, which is easy to operate.

In the foregoing embodiment, the first support portion 125a may include a first housing 126a, and the first housing 126a is provided with a first accommodation portion 127a that is hollow. The second support portion 125b may include a second housing 126b, and the second housing 126b is provided with a second accommodation portion 127b that is hollow. In this embodiment, the first accommodation portion 127a and the second accommodation portion 127b each may communicate with the accommodation cavity 124, to form a cavity passing through the inside of the glasses temple 12. The electronic component 13 may include a first electronic component 13a and a second electronic component 13b. The first electronic component 13a may be disposed in the first accommodation portion 127a, and the second electronic component 13b may be disposed in the second accommodation portion 127b. The first electronic component 13a and the second electronic component 13b each may be connected to the flexible metal member 123. Certainly, in another embodiment, the first electronic component 13a and the second electronic component 13b may not be connected to the flexible metal member 123. This is not specifically limited herein.

In an embodiment, the smart glasses 10 may have functions such as calling and image shooting. Specifically, the first electronic component 13a may include a flexible circuit board, a speaker, a microphone, a communication module, a camera, and a controller, and the second electronic component 13b may include a battery. In this embodiment, one end of the flexible circuit board may pass through the accommodation cavity 124 from the first accommodation portion 127a and extend to the second accommodation portion 127b. In the accommodation cavity 124, the flexible circuit board may be fastened to the flexible metal member 123. In the second accommodation portion 127b, the battery may be fastened to the flexible circuit board.

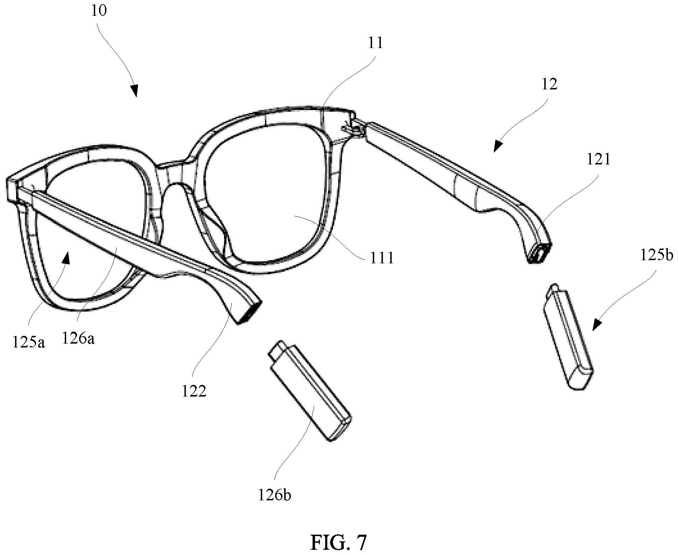

During manufacturing of the glasses temple 12 of the smart glasses 10 in the foregoing embodiments, the first support portion 125a and the second support portion 125b may be first manufactured. Then, the injection mold is disposed between the first support portion 125a and the second support portion 125b, and a cavity of the injection mold is aligned with end faces of the first housing 126a and the second housing 126b. The flexible metal member 123 is positioned in the injection mold. Then, an injection material is injected into the mold, so that the injection material can wrap the outer surface of the flexible metal member 123, and the injection material is in contact with the first housing 126a and the second housing 126b. After the injection material is cured and molded into the flexible housing 122, the flexible housing 122, the first housing 126a, and the second housing 126b may form an integrated structure, so that structural strength of the glasses temple 12 can be enhanced. During injection of the injection material into the mold, the injection material may alternatively not be in contact with the second housing 126b. FIG. 7 is a diagram of a structure of smart glasses according to an embodiment of this application. As shown in FIG. 7, after the injection material is cured and molded, the flexible housing 122 and the first housing 126a form an integrated structure. The second housing 126b may be detachably connected to the flexible housing 122 in a clamping manner, to facilitate dismounting and maintenance of the electronic component 13.

Based on a same technical concept, this application further provides an electronic device. The electronic device includes a body and the smart glasses 10 in the foregoing embodiments. The smart glasses 10 may be connected to the body. In this application, the electronic device may be an AR device, a VR device, another display device, or the like. When wearing the smart glasses 10, a user may change a bending adjustment portion of a glasses temple 12 to adjust a bent ear-fitting shape and an angle of the glasses temple 12, so that a degree of fitting between the smart glasses 10 and the head of the user can be improved, the smart glasses 10 can be worn more stably and aesthetically. This improves universality of the smart glasses 10, and further improves user experience in using the electronic device.

In some embodiments, an accommodation slot may be provided on the body of the electronic device. The smart glasses 10 may be placed in the accommodation slot, to facilitate accommodation of the smart glasses 10. In some other embodiments, the smart glasses 10 may be an interaction apparatus of the electronic device. Specifically, a first communication module may be disposed in the body, and an electronic component of the smart glasses 10 includes a second communication module. The first communication module is communicatively connected to the second communication module. In this way, the body can send an interaction instruction to the smart glasses 10, and the smart glasses 10 can feed back interaction information to the body.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. Smart glasses, comprising a glasses frame, a glasses temple, and an electronic component, wherein the glasses frame is connected to the glasses temple, and the electronic component is disposed in the glasses temple; and
the glasses temple comprises a bending adjustment portion, the bending adjustment portion comprises a flexible housing and a flexible metal member, the flexible housing is of a low-pressure integrated structure, the flexible housing is provided with a hollow accommodation cavity, and the flexible metal member is embedded in the accommodation cavity.

2. The smart glasses according to claim 1, wherein the glasses temple further comprises a support portion, the support portion comprises a housing, the housing is connected to the flexible housing, the housing is provided with a hollow accommodation portion, and the electronic component is disposed in the accommodation portion.

3. The smart glasses according to claim 2, wherein the support portion is connected between the glasses frame and the bending adjustment portion; or the bending adjustment portion is connected between the glasses frame and the support portion.

4. The smart glasses according to claim 2, wherein the support portion comprises a first support portion and a second support portion, the first support portion is connected between the glasses frame and the bending adjustment portion, and the second support portion is connected to an end that is of the bending adjustment portion and that is away from the first support portion.

5. The smart glasses according to claim 4, wherein the first support portion comprises a first housing, the first housing is provided with a first accommodation portion that is hollow, the second support portion comprises a second housing, the second housing is provided with a second accommodation portion that is hollow, and the first accommodation portion and the second accommodation portion each communicate with the accommodation cavity; and
the electronic component comprises a first electronic component and a second electronic component, the first electronic component is disposed in the first accommodation portion, the second electronic component is disposed in the second accommodation portion, and the first electronic component is connected to the second electronic component through the flexible metal member.

6. The smart glasses according to claim 1, wherein the flexible housing is connected to the glasses frame, and the electronic component is disposed in the accommodation cavity and connected to the flexible metal member.

7. The smart glasses according to any one of claims 1 to 6, wherein a material of the flexible housing comprises any one or more of polyamide, polyolefin, or polyurethane hotmelt.

8. The smart glasses according to any one of claims 1 to 7, wherein a material of the flexible metal member comprises any one or more of titanium, copper, stainless steel, or aluminum.

9. The smart glasses according to any one of claims 1 to 8, wherein the smart glasses further comprise a lens mounted on the glasses frame, and the lens comprises a flat lens, a concave lens, a convex lens, or a display.

10. An electronic device, comprising a body and the smart glasses according to any one of claims 1 to 9, wherein the body is connected to the smart glasses.
